Europäisches Patentamt

(19) European Patent Office

Office européen des brevets

(11) Numéro de publication: **0 058 807**
**B1**

(12) **FASCICULE DE BREVET EUROPEEN**

(45) Date de publication du fascicule du brevet: **24.07.85**

(51) Int. Cl.⁴: **F 16 K 11/06, C 02 F 9/00**

(21) Numéro de dépôt: **81402079.8**

(22) Date de dépôt: **28.12.81**

(54) **Vanne de dérivation pour appareil de traitement des liquides.**

(30) Priorité: **30.12.80 FR 8027804**

(43) Date de publication de la demande:
**01.09.82 Bulletin 82/35**

(45) Mention de la délivrance du brevet:
**24.07.85 Bulletin 85/30**

(84) Etats contractants désignés:
**AT BE CH DE GB IT LI LU NL SE**

(56) Documents cités:
**DE-A-2 115 678**
**FR-A-1 218 463**
**FR-A-2 265 685**
**FR-A-2 275 248**

(73) Titulaire: **Dannequin, Robert**
**Rue du Moulin de St. Blaise**
**F-60400 Noyon (FR)**

(72) Inventeur: **Dannequin, Robert**
**Rue du Moulin de St. Blaise**
**F-60400 Noyon (FR)**

Courier Press, Leamington Spa, England.

## Description

L'invention se rapporte à une vanne à quatre voies et plus particulièrement, mais non exclusivement, à une telle vanne contrôlant la dérivation d'un liquide circulant dans un circuit principal vers un circuit secondaire notamment en vue de son traitement dans un appareil.

On connaît déjà de telles vannes permettant par exemple de raccorder une arrivée d'eau à un réseau de distribution, soit directement, soit en passant au travers d'un adoucisseur (FR—A—2265685 et FR—A—1218463).

Ces vannes à quatre voies comprennent un corps généralement cylindrique au long duquel s'échelonnent quatre orifices de raccordement parmi lesquels les deux orifices centraux sont destinés à être reliés l'un à l'arrivée d'eau, l'autre à la sortie vers le réseau de distribution alors que les deux orifices extrêmes sont destinés à être reliés l'un à la sortie vers l'adoucisseur, l'autre à l'entrée en retour de l'adoucisseur.

Pour, au travers de la vanne, raccorder les deux orifices centraux soit directement, soit par l'intermédiaire d'un circuit passant par les deux autres orifices et donc par l'adoucisseur, dans le corps de la dite vanne est monté un tiroir coulissant axialement.

Ce coulissement peut évidemment être commandé par différents moyens tels des boutons poussoirs (FR—A—12184 63) ou un système vis-écrou (FR—A—2265685).

Ce tiroir se présente sous la forme d'une tige de commande sur laquelle sont calés des clapets.

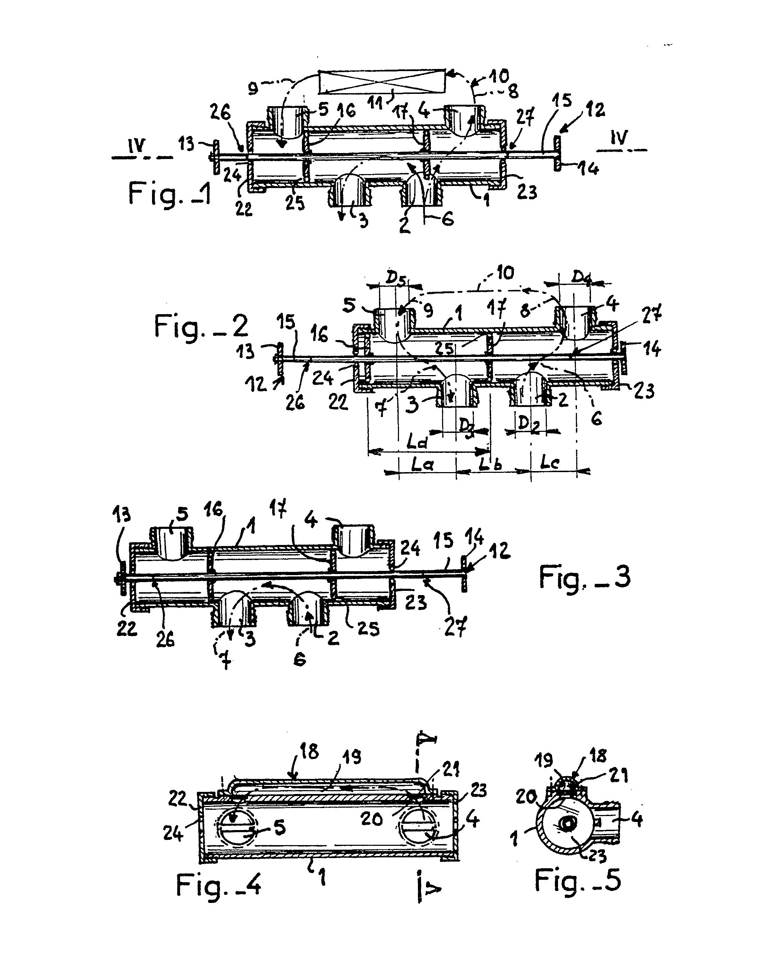

Du FR—A—1.218.463 (figure 2) on connaît déjà une vanne de distribution à tiroir et à quatre voies correspondant au préambule de la revendication 1, dans laquelle les clapets sont calés avec un écartement tel que, dans une position du tiroir, ils coopèrent avec des sièges situés dans le corps entre, d'une part, les orifices centraux et, d'autre part, chacun des orifices extrêmes ce qui isole le circuit passant par les orifices extrêmes et l'adoucisseur et assure donc le raccordement direct des orifices centraux.

Dans la position opposée du tiroir, position à laquelle il parvient après que ses clapets seront passés chacun au dessus d'un orifice allant pour l'un vers l'adoucisseur, et pour l'autre vers le réseau de distribution, l'arrivée d'eau communique donc avec la sortie vers l'adoucisseur dont le retour communique, quant à lui, avec la sortie vers le réseau.

Le clapet ayant passé au dessus de l'orifice de sortie vers le réseau de distribution coopérera avec un siège qui, dans le corps, est situé entre les orifices centraux, pour éviter que le flux passe directement d'un orifice central à l'autre.

Cette isolation entre les orifices centraux peut aussi n'être que relative ou partielle (FR—A—2265685) et par exemple être assurée non par ce clapet là mais par un troisième clapet prenant appui sur un siège usiné dans une face décolletée dans le corps.

De ce fait, dès l'amorce du mouvement de la tige vers la première position du tiroir, ce troisième clapet s'écarte légèrement de la face décolletée et permet un certain débit direct entre les orifices centraux ce qui a surtout pour but d'ajuster le degré hydrotimétrique de l'eau.

En effet, en sortie de l'adoucisseur, l'eau a un dégré hydrotimétrique nul, alors qu'il est toujours conseillé d'utiliser une eau titrant au moins sept degrés hydrotimétriques.

En mélangeant une certaine dose d'eau non adoucie à l'eau adoucie, en court-circuitant pour cela partiellement l'adoucisseur, on arrive à ajuster ce titre et c'est ici le rôle de ce troisième clapet.

Un inconvénient de ce moyen de réglage du titre est toutefois que le dosage doit rester limité afin que les autres clapets, qui sont liés en translation avec le troisième, ne viennent pas gêner le débit par le circuit normal.

Là n'est toutefois pas l'inconvénient majeur de cette vanne à quatre voies dont, lorsque le tiroir est en position intermédiaire afin tout en alimentant directement le réseau principal d'envoyer un certain débit à l'adoucisseur, on déplore surtout le fait que le tiroir ne permette pas d'isoler le retour de l'adoucisseur du départ vers le réseau de distribution.

Or, par exemple en cas d'essais ou de dépannage de l'adoucisseur, celui-ci risque alors d'envoyer de l'eau impropre dans le réseau de distribution qu'il faudra ensuite rincer, d'où une grosse perte de temps.

Afin de ne pas envoyer dans le réseau de distribution l'eau de rinçage ou de régénération, il est connu du FR—A—1218463 (figure 5) d'utiliser des vannes ayant, à cet effet, deux voies supplémentaires ce qui complique toutfois fortement le corps et le tiroir de distribution.

L'invention vise à obtenir est une vanne à quatre voies du type précité permettant tant le raccordement des orifices centraux soit directement, soit via un circuit de dérivation, que la division du flux entre le réseau principal et le circuit de dérivation tout en isolant le retour du circuit de dérivation du départ vers le réseau principal.

A cet effet, l'invention a pour objet une vanne du type cité plus haut, notamment caractérisé en ce qu'en combinaison:

— d'une part, la distance mesurée entre les axes de l'orifice de retour du circuit secondaire et de l'orifice de sortie vers la suit du circuit principal est plus importante que la distance mesurée entre les axes de l'orifice de départ vers le circuit secondaire et de l'orifice d'arrivée du circuit principal, et,
— d'autre part, la distance séparant les plans de joint des deux clapets a une valeur à la fois, tout d'abord, supérieure à la somme de la distance mesurée entre les axes de l'orifice de retour du circuit secondaire et de l'orifice de sortie vers le circuit principal, majorée de la moitié des largeurs de ces mêmes orifices et, par ailleurs, inférieure à la somme des distances mesurées, la première entre l'orifice de retour du circuit secondaire et l'orifice de départ dans le circuit principal, la seconde entre les orifices d'arrivée et de départ du circuit principal.

Des modes particuliers de réalisation de l'invention apparaissent dans les revendications dépendantes.

L'invention sera bien comprise à l'aide de la description ci-après faite à titre d'exemple non limitatif, en regard du dessin ci-annexé, qui représente schématiquement:
— figure 1: la vanne vue en coupe,
— figures 2 et 3: cette vanne avec son tiroir vu dans deux autres positions,
— figure 4: une coupe selon IV—IV de la figure 1 (sans le tiroir),
— figure 5: une coupe selon V—V de la figure 4.

En se reportant au dessin, on voit que de manière connue, la vanne comprend principalement un corps généralement cylindrique 1 au long duquel, avec entre eux des écartements $L_a$, $L_b$, $L_c$, qui seront précisés plus loin, s'échelonnent quatre orifices de raccordement 2, 3, 4 et 5, ayant des largeurs et par exemple des diamètres D2, D3, D4, D5, de préférence équivalents.

Ce corps pourra être réalisé par montage ou par étirement de la paroi d'un tube au droit de chanque orifice selon la technique exposée dans DE—A—2115678.

Les deux orifices intermédiaire dits centraux 2, 3 sont destinés à être reliés l'un 2 à l'arrivée de l'eau non traitée 6, l'autre au départ de l'eau 7 vers le réseau de distribution alors que les deux orifices extrêmes 4, 5 sont destinés à être reliés respectivement, celui 4 jouxtant l'arrivée 2 de l'eau non traitée 6 au départ 8, l'autre 5 jouxtant l'orifice 3 de sortie vers le réseau de distribution au retour 9 d'un circuit secondaire 10 tel un circuit passante par un adoucisseur 11.

Pour, au travers de la vanne, raccorder les deux orifices centraux 2, 3 soit directement (figure 3), soit par l'intermédiaire das deux autres orifices 4, 5 et du circuit secondaire 10 (figure 2), dans le corps 1 de cette vanne, est monté un tiroir 12 coulissant axialement.

Ce coulissement peut évidemment être commandé par tout moyen connu, tel des boutons poussoirs 13, 14.

Ce tiroir se présente sous la forme d'une tige de commande 15, sur laquelle sont calés des clapets 16, 17.

Ces clapets 16, 17 sont calés sur la tige, par exemple par soudure, avec un écartement $L_d$ tel que, lorsque le tiroir est poussé complétement d'un côté (figure 3), ils se situent dans le corps respectivement entre un des orifices centraux 2, 3 et un des orifices extrêmes 4, 5 ce qui isole le circuit secondaire 10 et assure donc le raccordement direct des orifices centraux 2, 3.

Dans la position opposée du tiroir 12 (figure 2), position dans laquelle il parvient après que ses clapets 16, 17 seront passés chacun au dessus d'un orifice allant, l'un 2 au circuit principal, l'autre 5 au circuit secondaire, les deux clapets ont alors dégagé le passage entre, d'une part, les orifices centraux, et, d'autre part, les orifices extrêmes et dans le même temps, l'un de ces clapets est venu se placer entre les deux orifices centraux 2, 3, pendant que l'autre va au delà des quatre orifices et devient inopérant.

De ce fait, les orifices centraux 2, 3 ne sont raccordés entre eux que par l'intermédiaire des orifices extrêmes et du circuit secondaire.

Dans le cas où le circuit secondaire passe par un adoucisseur ou d'un autre appareil nécessitant un mélange, afin par exemple d'ajuster le titra hydrotimétrique de leau, la vanne peut évidemment comprendre un mélangeur 18 d'un partie de l'eau non traitée à l'eau provenant de l'adoucisseur.

De préférence, à un mélange par l'entretien d'une fuite au niveau du clapet central, ce mélange sera assuré par un dispositif du type décrit au FR—A—2275248, lequel comprend notamment une conduite 19 de liaison directe (figures 4 et 5), dans laquelle sont prévus au moins un orifice 20 calibré en fonction du débit choisi et une pièce 21 en matière poreuse qui, à la fois, assure la filtration et amène la pression de la fraction du liquide non traité ainsi prélevé à la valeur de la pression du liquide sortant de l'adoucisseur.

L'étanchéité des clapets 16, 17 et dans les passages de la tige de commande 12 au travers des extrémités 22, 23 du corps de vanne, sera bien sûr garantie par des joints 24, 25 de tout type connu.

A moins l'une de ces extrémités 22, 23 pourra être constituée sous la forme d'un bouchon rapporté sur le corps par exemple par vissage.

Selon une caractéristique essentielle de l'invention:
— d'une part, les distances $L_a$, $L_c$, mesurées entre les axes de chacun des orifices extrêmes 4, 5 et celui des orifices centraux 2, 3 qu'ils côtoient, sont différentes l'une de l'autre et, plus précisément, la distance $L_a$, measurée entre les axes de l'orifice 5 de retour du circuit secondaire et de l'orifice 3 de sortie vers la suite du circuit principal, est plus importante que la distance $L_c$, mesurée entre les axes de l'orifice 4 de départ vers le circuit secondaire et de l'orifice 2 d'arrivée du circuit principal, et
— d'autre part, la distance $L_d$, séparant les plans de joint des clapets 16, 17 a une valeur à la fois, tout d'abord, supérieure à la somme de l'entraxe $L_a$, mesurée entre l'orifice 5 de retour du circuit secondaire et l'orifice 3 de sortie vers le circuit principal majorée de la moitié des diamètres D3, D5 de ces mêmes orifices et, par ailleurs, inférieure à la somme $L_a$ plus $L_b$ des entraxes mesurés, le premier entre l'orifice 5 de retour du circuit secondaire et l'orifice 3 de départ dans le circuit principal, le second entre les orifices 2 et 3 d'arrivée et de départ du circuit principal.

Grâce à ces proportions caractéristiques, dans une position intermédiaire (figure 1) du tiroir 12, l'une 17 des clapets 16, 17 peut déjà être situé en face de l'orifice 2 d'arrivée du circuit principal alors que l'autre clapet 16 est encore entre l'orifice 5 de retour du circuit secondaire et l'orifice 3 de départ vers le circuit principal.

De ce fait, par exemple dans le cas d'une vanne de contrôle d'un adoucisseur, l'eau non traitée 6 peut alimenter concurremment l'orifice 3 de départ vers le réseau de distribution et l'orifice 4 de départ vers l'adoucisseur alors que l'orifice 5 de retour de cet adoucisseur reste isolé du dit orifice 3 de départ vers le réseau de distribution.

Cela a l'avantage de permettre des essais de régénération, d'absorption de saumure, ou un dépannage de l'adoucisseur sans être obligé de rincer tout le réseau de distribution pour en éliminer tous les rejects de l'adoucisseur.

Afin de déterminer facilement la position à donner au tiroir 12, sa tige pourra avantageusement porter au moins un repère 26, 27 coopérant avec la face externe des bouchons 22, 23.

Bien que décrite dans le cas d'une application au raccordement d'un adoucisseur, la vanne peut être utilisée dans tous les cas où un appareil de traitement tel un déminéralisateur d'un liquide doit être raccordé à une conduite principale.

Elle trouve de ce fait application dans de nombreux domaines, dans l'industrie, les laboratoires et les habitations.

## Revendications

1. Vanne de distribution à tiroir et à quatre voies, destinée plus particulièrement, mais non exclusivement, au contrôle de la dérivation d'un liquide tel de l'eau circulant dans un circuit principal vers un circuit secondaire (10), comprenant:

— d'une part, un corps (1) au long duquel s'échelonnent quatre orifices de raccordement (2, 3, 4, 5) ayant des largeurs déterminées (D2, D3, D4 et D5) avec entre eux des écartements déterminés ($L_a$, $L_b$ et $L_c$), les deux orifices intermédiaires (2, 3), dits "orifices centraux", sont destinés à être reliés l'un (2) à l'arrivée du liquide (6) du circuit principal, l'autre (3) au départ du liquide vers la suite du circuit principal, alors que les deux orifices extrêmes (4, 5) sont destinés à être reliés au circuit secondaire (10), celui (4) jouxtant l'arrivée (2) du circuit principal étant raccordé au départ (8) vers le circuit secondaire alors que celui (5) jouxtant l'orifice (3) de sortie vers la suite du circuit principal est raccordé au retour du dit circuit secondaire (10);

— d'autre part, un tiroir (12) monté coulissant axialement dans le corps (1) et constitué d'une tige de commande (15) sur laquelle deux clapets (16, 17) sont calés avec un écartement déterminé ($L_d$), tel que, lorsque le tiroir est poussé d'un côté, ces clapets (16, 17) se situent dans le corps (1) respectivement entre, d'une part, un des deux orifices centraux (2, 3) et, d'autre part, un des orifices extrêmes (4, 5), alors que, lorsque le tiroir est poussé de l'autre côté, position dans laquelle il parvient après qu'un (17) des clapets est passé chacun au dessu d'un orifice (2) allant au circuit principal et que l'autre clapet (16) est passé au dessus d'un orifice (5) allant au circuit secondaire, afin que l'un (17) de ces clapets vienne se placer entre les deux orifices centraux (2, 3) pendant que l'autre clapet (16) va au delà des quatre orifices et devient inopérant, cette vanne étant caracterisee en ce que:

— d'une part, la distance ($L_a$) mesurée entre les axes de l'orifice (5) de retour (9) du circuit secondaire (10) et de l'orifice (3) de sortie vers la suite du circuit principal est plus importante que la distance ($L_c$) mesurée entre les axes de l'orifice (4) de départ (8) vers le circuit secondaire (10) et de l'orifice (2) d'arrivée du circuit principal et,

— d'autre parti, la distance ($L_d$) séparant les plans de joint des deux clapets (16, 17) a une valeur à la fois, tout d'abord, supérieure à la somme de la distance ($L_a$) mesurée entre les axes de l'orifice (5) de retour (9) du circuit secondaire et de l'orifice de sortie (3) vers le circuit principal, majorée de la moitié des largeurs (D3, D5) de ces mêmes orifices et, par ailleurs, inférieure à la somme ($L_a$ plus $L_b$) des distances mesurées la première ($L_a$) entre l'orifice (5) de retour du circuit secondaire (10) et l'orifice (3) de départ dans le circuit principal et la seconde ($L_b$) entre les orifices (2, 3) d'arrivée et de départ du circuit principal.

2. Vanne selon la revendication 1 caractérisé en ce que la tige (15) du tiroir (12) porte au moins un repère (26, 27) coopérant avec la face extrème du corps pour déterminer une position intermédiaire du tiroir dans laquelle l'une (17) des clapets se situera déjà en face de l'orifice (2) d'arrivée du circuit principal alors que l'autre (16) sera encore entre l'orifice (5) de retour (9) du circuit secondaire (10) et l'orifice (3) de départ vers la suite du circuit principal.

3. Vanne selon la revendication 1 ou 2, caractérisée en ce qu'elle comprend un mélangeur (18) d'une partie du liquide (6) prelevé en amont du circuit secondaire (10) au liquide (9) avant traversé le dit circuit secondaire (10).

4. Vanne selon la revendication 3 caractérisée en ce que son mélangeur (18) comprend une conduite (19) de liaison directe dans laquelle sont prévus au moins un orifice (20) calibré et une pièce (21) en matière apte à filtrer le liquide prélevé en amont du circuit secondaire (10) et à le ramener à une pression égale à celle qu'a le liquide en sortie du circuit secondaire.

## Patentansprüche

1. Vierweg-Absperrschieber, besonders aber nicht ausschliesslich bestimmt für die Kontrolle der Umleitung einer flüssigkeit wie des Wassers, die in einem Hauptkreis zirkuliert, nach einem Sekundärkreis (10), bestehend aus:

— einerseits ein Gehäuse (1), längs dessen vier Verbindungsöffnungen (2, 3, 4, 5) mit bestimmten Breiten (D2, D3, D4 und D5) und bestimmten Abständen (La, Lb und Lc) zwischen ein znder verteilt sind. Die zwei Zwischenöffnungen (2, 3), die als "Zentralöffnungen" bezeichnet sind, sind so ausgelegt, dass die eine (2) mit dem Eintritt der Flüssigkeit (6) des Hauptkreises und die andere (3) mit dem Austritt der Flüssigkeit nach dem Anschliessenden Teil des Hauptkreises zu verbinden sind, während die zwei Endöffnungen (4, 5) mit dem Sekundärkreis (10) zu verbinden sind: diejenige (4), die an den Eintritt (2) des Hauptkreises stösst, ist mit dem Austritt (8) nach dem Sekundärkreis zu verbinden, während diejenige (5), die an die Austrittsöffnung (3) nach dem anschliessenden Teil des Hauptkreises stösst, mit dem Rücklauf des vorerwähnten Sekundärkreises (10) verbunden ist;

— andererseits ein Schiever (12), der im Gehäuse (1) axial gleitet und aus einer Steuerstange (15) besteht, an welcher zwei Ventile (16, 17) mit einem solchen Abstand (Ld) geklemmt sind, dass, wenn der Schieber nach einer Seite verschoben wird, diese Ventile (16, 17) im Gehäuse (1) zwischen einerseits einer der beiden Zentralöffnungen (2, 3) und andererseits einer der Endöffnungen (4, 5) sind, während, wenn der Schieber nach der anderen Seite verschoben wird (diese Stellung wird erreicht, nachdem eines (17) der Ventile über eine an den Hauptkreis führende Öffnung (2) passiert hat und das andere Ventil (16) über eine an den Sekundärkreis führende Öffnung (5) passiert hat), eines (17) dieser Ventile sich zwischen den beiden Zentralöffnungen (2, 3) stellt, während das andere Ventil (16) über die vier Öffnungen hinaus fährt und unwirksam wird; dieser Absperrschieber ist durch folgendes gekennzeichnet:

— einerseits ist der Abstand (La) zwischen den (9) Mittellinien der Rücklauföffnung (5) des Sekundärkreises (10) und der Austrittsöffnung (3) nach dem anschliessenden Teil des Hauptkreises grösser als der Abstand (Lc) zwischen (8) den Mittellinien der Austrittsöffnung (4) nach dem Sekundärkreis (10) und der Eintrittsöffnung (2) des Hauptkreises

— andererseits ist der Abstand (Ld) zwischen dem Mittellinien der Ventile (16, 17) grösser als die Summe des zwischen den Mittellinien der (9) Rücklauföffnung (5) des Sekundärkreises und der Austrittsöffnung (3) nach dem Hauptkreis gemessenen Abstandes, vermehrt um die Hälfte der Breiten (D3, D5) dieser Öffnungen, und zugleich kleiner als die Summe (La plus Lb) des zwischen der Rücklauföffnung (5) des Sekundärkreises (10) und der Austrittsöffnung (3) nach dem Hautpkreis gemessenen Abstandes (La) und des zwischen den Ein- und Austrittsöffnungen (2, 3) des Hauptkreises gemessenen Abstandes (Lb).

2. Schieber gemäss Anspruch 1, dadurch gekennzeichnet, dass die Stange (15) des Schiebers (12) mindestens ein Merkzeichen (26, 27) aufweist, das der äussersten Seite des Gehäuses entspricht, um eine Zwischenstellung des Schiebers zu bestimmen, wobei eines (17) der Ventile schon gegenüber der Eintrittsöffnung (2) des Hauptkreises ist, während das andere (16) immer (9) noch zwischen der Rücklauföffnung (5) des Sekundärkreises (10) und der Austrittsöffnung (3) nach dem anschliessenden Teil des Hauptkreises ist.

3. Schieber gemäss Anspruch 1 oder 2, dadurch gekennzeichnet, dass er einen Mischer (18) umfasst, der einen Teil der oberhalb des Sekundärkreises (10) entnommenen Flüssigkeit (6) und die durch den Sekundärkreis (10) geflossene Glüssigkeit (9) mischt.

4. Schieber gemäss Anspruch 3, dadurch gekennzeichnet, dass sein Mischer (18) eine direkte Verbindungsleitung (19) umfasst, in welcher mindestens eine kalibrierte Öffnung (20) und ein Teil (21) vorgesehen sind, dessen Stoff so ausgelegt ist, dass er die oberhalb des Sekundärkreises (10) entnommene Flüssigkeit filtern und ihren Druck auf den gleichen Druck reduzieren kann, wie den der Flüssigkeit am Austritt des Sekundärkreises.

**Claims**

1. Four-way stop slide valve, more particularly but not exclusively intended to control the diversion of a liquid such as water circulating in a main circuit towards a secondary circuit (10), comprising:

— on the one hand one body (1), along which four connection ports (2, 3, 4, 5) with definite widths (D2, D3, D4 and D5) and definite distances between themselves (La, Lb and Lc) are spaced out. The two intermediate ports (2, 3), called "central ports", are intended to be connected one (2) to the inlet of the main circuit liquid (6), the other (3) to the outlet of the liquid towards the continuation of the main circuit, whereas the two extreme ports (4, 5) are intended to be connected to the secondary circuit (10), the one (4) contiguous to the inlet (2) of the main circuit being connected to the outlet (8) towards the secondary circuit, whereas the one (5) contiguous to the outlet port (3) towards the continuation of the main circuit is connected to the return of the aforesaid secondary circuit (10);

— on the other hand one slide (12) axially sliding in the body (1) and made of one control rod (15), on which two valves (16, 17) are locked with such a definite space (Ld) that, when the slide has been pushed on one side, these valves (16, 17) are situated in the body (1) respectively between, on the one hand, one of the two central ports (2, 3) and, on the other hand, one of the extreme ports (4, 5), whereas, where the slide has been pushed on the other side, position it achieves after one (17) of the valves has passed over a port (2) leading to the main circuit and the other (16) has passed over a port (5) leading to the secondary circuit, in order that one (17) of these valves should place itself between the two central ports (2, 3), while the other valve (16) moves beyond the four ports and becomes inoperative, this valve being characterized in the fact that:

— on the one hand, the distance (La) measured between the center lines of the return (9) port (5) of the secondary circuit (10) and the outlet port (3) towards the continuation of the main circuit is higher than the distance (Lc) measured between the center lines of the outlet (8) port (4) towards the secondary circuit (10) and the inlet port (2) of the main circuit, and,

— on the other hand, the distance (Ld) between the center lines of the two valve (16, 17) gaskets is both higher than the sum of the distance (La) measured between the center lines of the return (9) port (5) of the secondary circuit and the outlet (3) port towards the main circuit, increased by the half of the widths (D3, D5) of the same ports, and also lower than the sum (La plus Lb) of the distances measured the first one (La) between the return port (5) of the secondary circuit (10) and the outlet port (3) towards the main circuit and the second one (Lb) between the inlet and outlet ports (2, 3) of the main circuit.

2. Valve as per claim 1 characterized in that the rod (15) of the slide (12) bears at least one mark (26, 27) cooperating with the extreme face of the body to determine an intermediate position of the slide, in which one (17) of the valves will already be situated opposite to the inlet port (2) of the main circuit, while the other (16) will still be located between the return (9) port (5) of the secondary circuit (10) and the outlet port (3) towards the continuation of the main circuit.

3. Valve as per claim 1 or 2, characterized in that it comprises one mixer (18) of one part of the liquid (6) taken from the upstream part of the secondary circuit (10) to the liquid (9) having passed through the secondary circuit (10).

4. Valve as per claim 3 characterized in that its mixer (18) comprises one direct connection pipe (19) provided with at least one gauged port (20) and one part (21) in a material able to filter the liquid taken from the upstream part of the secondary circuit (10) and to bring it down to a pressure equal to that of the liquid at the outlet of the secondary circuit.

0 058 807

Fig. _1

Fig. _2

Fig. _3

Fig. _4    Fig. _5

1